# EUROPEAN PATENT APPLICATION

(11) **EP 1 892 493 A1**
(43) Date of publication of application: **27.02.2008**
(21) Application number: 06025956.1
(22) Date of filing: 14.12.2006
(51) Int. Cl.: F28D 7/00, F28D 20/00, H01M 8/02, H01M 8/04, H01M 8/00, H01M 8/06

(54) **Fuel cell system**

(30) Priority: 21.08.2006 KR 20060079068
(71) Applicant: LG Electronics Inc., Yongdungpo-gu Seoul (KR)
(72) Inventor: Park, Myung-Seok, Gwangmyeong, Gyeonggi-Do (KR); Hwang, Yong-Jun, Mapo-Gu, Seoul (KR); Ko, Seung-Tae, Geumcheon-Gu, Seoul (KR); Park, Jung-Gyu, Seoul (KR); Heo, Seong-Geun, Bucheon, Gyeonggi-Do (KR); Kim, Ki-Dong, Gimpo, Gyeonggi-Do (KR); Kim, Tae-Won, Anyang, Gyeonggi-Do (KR); Ryoo, Sung-Nam, Seo-Gu, Daejeon (KR); Kim, Sun-Hoe, Geumcheon-gu Korea (KR); Gu, Bon-Gwan, Seoul (KR); Youk, Hyun-Jae, Suwon, Gyeonggi-Do (KR); Lee, Hyun-Jae, Seoul (KR); Lee, Gil-Yong, Geumcheon-gu Korea (KR); Park, Jun-Seong, Jung-Gu, Seoul (KR); Kwon, Sun-Gu, Wonmi-Gu, Bucheon, Gyeonggi-Do (KR); Park, Byung-Tak, Danyang-Gun, Chungcheongbuk-Do (KR); Lee, Sang-Heon, Uijeongbu, Gyeonggi-Do (KR); Jin, Geun-Ho, Dongdaemun-Gu, Seoul (KR)
(74) Representative: TER MEER - STEINMEISTER & PARTNER GbR

(57) **Abstract**

A fuel cell unit system is disclosed, which is provided in a multi-home energy supplying system, wherein the multi-home energy supplying system includes the plurality of fuel cell unit system provided to respective houses, and one common-use reforming unit to supply hydrogen to the plurality of fuel cell unit system, the fuel cell unit systems (40) comprising a stack unit (300) which generates electricity by an electrochemical reaction between supplied air and the hydrogen supplied from the common-use reforming unit (10); an air supplying unit (100) which supplies the air to the stack unit; an integral heat exchange unit (500) which cools the stack unit by recovering the heat from the stack unit, and stores the recovered heat; a hot-water supplying unit (200) which receives the heat stored in the integral heat exchange unit, and provides heat and hot water; an auxiliary heat supplying unit (400) which generates the heat by receiving the air supplied from the air supplying unit, and the hydrogen directly supplied from the common-use reforming unit or discharged from the stack unit after the electrochemical reaction, and supplies the generated heat to the hot-water supplying unit; and an electric output unit (600) which converts the electricity generated in the stack unit into a utility power, and supplies the produced utility power to the respective houses.

## Description

### BACKGROUND OF THE INVENTION

### 1. Field of the Invention

The present invention relates to a multi-house energy supplying system having a fuel cell unit system installed in each of houses and a common-use reforming unit for supplying hydrogen to the fuel cell unit system, and more particularly, to a fuel cell unit system which can minimize an occupied space in each house, and can stably supply electrical energy and heat energy to each house in all seasons.

### 2. Description of the Background Art

In these days, oil is generally used as an energy resource. However, the oil may cause an environmental contamination. As the industry has been developed and the number of automobiles has been increased explosively, oil prices rise rapidly, and oil deposits are exhausted. In this respect, there are requirements for researches regarding new energy resources which can substitute for the oil. According to the researches for the new energy resource, a fuel cell has been developed.

The fuel cell is an energy conversion apparatus which can directly convert a chemical energy into an electrical energy. As continuously providing a fuel including hydrogen and an air including oxygen to the fuel cell, an electrochemical reaction is generated between the supplied hydrogen and oxygen, and then an energy difference is directly converted into the electrical energy. Accordingly, the fuel cell generates the electrical energy continuously by the supplied fuel and oxygen, and also generates heat of reaction and water as by-products.

The fuel cell of various kind can be provided, for example, phosphoric acid fuel cell, alkaline fuel cell, proton exchange membrane fuel cell, molten carbonate fuel cell, solid oxide fuel cell, direct methanol fuel cell, and etc.

The fuel cell may be classified into a residential fuel cell which supplies electricity to the house; an vehicle fuel cell which is used for an electro-mobile; and a small-sized fuel cell which is used for a mobile terminal or a notebook computer.

Especially, the residential fuel cell is developed to stably supply the electrical energy to house appliances and lighting apparatus. If a residential fuel cell system using the residential fuel cell is installed in the house or restaurant, the house or restaurant is stably supplied with the external electrical energy produced from a power plant, and the electrical energy produced from the fuel cell.

If having the four seasons, such as those in Korea, the winter season requires a large amount of electrical energy for heating rooms, and the summer season also requires a large amount of electrical energy for cooling rooms. Especially, if using gases such as LNG for heating the rooms, the gas energy for heating the rooms is largely consumed in the winter season, and the consumption of electrical energy is increased in the summer season due to the use of an air conditioner and a refrigerator. Accordingly, the short supply of electrical energy may be happened in the summer season, and the rise of gas price may be caused in the winter season due to the excessive use of gas energy. Thus, it is important to solve the problems regarding the short supply of electrical energy and the rise of gas price.

Also, it is necessary to minimize the residential fuel cell system in size. If the residential fuel cell system has the large size, the residential space for each house is relatively decreased due to the large occupied space of the residential fuel cell system, whereby the family members feel uncomfortable.

### SUMMARY OF THE INVENTION

Therefore, an object of the present invention is to provide a fuel cell unit system which can supply electrical and heat energy to each of houses with high efficiency, and can realize the stable energy supply for each house in the summer and winter seasons.

Another object of the present invention is to provide a fuel cell unit system of a small size thereby increasing a residential space for each house.

Another object of the present invention is to provide a fuel cell unit system which can heat a room by transmitting a heat to a heating line passing through all portions of the floor, wall or ceiling of each room in the house.

Another object of the present invention is to provide a fuel cell unit system which can reuse an exhaust gas of high temperature discharged after a catalytic reaction of an auxiliary heat supplying unit.

Another object of the present invention is to provide a fuel cell unit system which can re-supply and re-circulate remaining hydrogen discharged from a stack unit after generation of electricity to the stack unit.

Another object of the present invention is to provide a fuel cell unit system in which the stack unit is cooled without the large number of heat exchangers; a temperature of hydrogen supplied to a fuel pole of the stack unit is raised; a temperature of air supplied to an air pole of the stack unit is raised; and a hot water stored in a hot-water storage tank is heated, at one time.

To achieve these and other advantages and in accordance with the purpose of the present invention, as embodied and broadly described herein, there is a fuel cell unit system provided in a multi-home energy supplying system, wherein the multi-home energy supplying system includes the plurality of fuel cell unit system provided to respective houses, and a common-use reforming unit to supply hydrogen to the plurality of fuel cell unit system, the fuel cell unit system comprising a stack unit which generates electricity by an electrochemical reaction between supplied air and the hydrogen supplied from the common-use reforming unit; an air supplying unit which supplies the air to the stack unit; an integral heat exchange unit which cools the stack unit by recovering the heat from the stack unit, and stores the recovered heat; a hot-water supplying unit which receives the heat stored in the integral heat exchange unit, and provides heat and hot water; an auxiliary heat supplying unit which generates the heat by receiving the air supplied from the air supplying unit, and the hydrogen directly supplied from the common-use reforming unit or discharged from the stack unit after the electrochemical reaction, and selectively supplies the generated heat to the hot-water supplying unit; and an electric output unit which converts the electricity generated in the stack unit into a utility power, and supplies the generated utility power to the respective houses.

The fuel cell unit system doesn't require an individual reformer to provide hydrogen, so that it is possible to decrease the fuel cell unit system in size, that is, the restriction for the installation space of the fuel cell unit system is decreased. Also, the fuel cell unit system is provided with the auxiliary heat supplying unit. Thus, both the electrical energy and the heat energy are stably supplied to the plurality of houses in the summer and winter seasons, thereby improving the reliability. Further, the environmental contamination can be prevented owing to the decreased used amount of oil for producing the electrical energy.

At this time, the air supplying unit includes a first air supplying unit which is comprised of a fan to supply the air to the auxiliary heat supplying unit; and a second air supplying unit which is comprised of a fan to supply the air to the stack unit, and a humidifier to humidify the supplied air.

Preferably, the integral heat exchange unit raises a temperature of air and hydrogen supplied to the stack unit by using the stored heat. The integral heat exchange unit includes a heat exchange module body which stores a cooling water, and an auxiliary heater provided inside the heat exchange module body, wherein the heat exchange module body has the inside provided with a second hot-water line which is connected from one portion of the hot-water storage tank with the other portion of the hot-water storage tank through the inside of the electric output unit, a first line which connects the common-use reforming unit with the stack unit, and an air supplying line which connects the air supplying unit with the stack unit to supply the air, wherein the second hot-water line, the first line and the air supplying line pass through the inside of the heat exchange module body. Preferably, an ion filter is provided in the cooling-water line. By the integral heat exchange unit, the stack unit is cooled without the large number of heat exchangers; the temperature of hydrogen supplied to a fuel pole of the stack unit is raised; the temperature of air supplied to an air pole of the stack unit is raised; and the hot water stored in the hot-water storage tank is heated, at one time.

Also, the hot-water supplying unit includes a hot-water storage tank which stores the hot water; a first hot-water line which is connected from one portion of the hot-water storage tank with the other portion of the hot-water storage tank through the inside of the auxiliary heat supplying unit; a first hot-water pump which is provided in the first hot-water line, and circulates the hot water; a second hot-water line which is connected from one portion of the hot-water storage tank with the other portion of the hot-water storage tank through the inside of the electric output unit and the inside of the integral heat exchange unit; a second hot-water pump which is provided in the second hot-water line, and circulates the hot water; and a heat exchanger which transmits the heat of hot water flowing in the first hot-water line to the hot water flowing in the inside of the heating line passing through all portions of a floor or wall of a room to heat the room. By the hot-water supplying line, the heat of hot water stored in the hot-water storage tank is transmitted to the hot water flowing in the heating line which passes through all portions of the floor, wall or ceiling of the room (R), thereby heating the room with high efficiency.

Also, the fuel cell unit system further includes a heat-rising unit which raises a temperature of the hydrogen supplied to the auxiliary heat supplying unit from the common-use reforming unit, and also raises a temperature of the air supplied to the auxiliary heat supplying unit from the air supplying unit by using an exhaust gas of high temperature discharged from the auxiliary heat supplying unit, wherein the heat-rising unit includes a heat-rising body; an exhaust gas inflow line which is provided for the inflow of exhaust gas discharged from the auxiliary heat supplying unit into the inside of the heat-rising body; an exhaust gas discharging line which is provided to discharge the exhaust gas to the inside of heat-rising body; a catalytic air line which is provided through the inside of the heat-rising body to supply the air provided from the air supplying unit to the auxiliary heat supplying unit; and a catalytic fuel line which is provided through the inside of the heat-rising body to supply the hydrogen supplied from the common-use reforming unit to the auxiliary heat supplying unit. By the heat-rising unit, the exhaust gas of high temperature, discharged from the auxiliary heat supplying unit after the catalytic reaction, can be reused.

Also, the fuel cell unit system further includes a re-circulating unit which re-supplies the remaining hydrogen discharged after the electrochemical reaction to the stack unit, wherein the re-circulating unit includes a moisture remover which removes moistures from the hydrogen discharged from the stack unit; a fan which sends the hydrogen having no moisture to the stack unit; a circulating line comprised of a first line which connects the common-use reforming unit with the stack unit, a second line which connects the stack unit with the moisture remover, a third line which connects the moisture remover with the fan, and a fourth line which connects the fan with the first line; a three-directional valve which is provided in the fourth line to selectively supply the hydrogen discharged from the stack unit to the stack unit or the auxiliary heat supplying unit; and a fifth line which connects the three-directional valve with the auxiliary heat supplying unit. Preferably, the rotation number of fan is previously set as the maximum revolutions to supply the hydrogen required for the maximum quantity of electricity produced by the stack unit. By the re-circulating unit, the remaining hydrogen after generation of electricity can be re-supplied to and re-circulated in the stack unit, whereby the fuel-using efficiency is improved.

The foregoing and other objects, features, aspects and advantages of the present invention will become more apparent from the following detailed description of the present invention when taken in conjunction with the accompanying drawings.

### BRIEF DESCRIPTION OF THE DRAWINGS

The accompanying drawings, which are included to provide a further understanding of the invention and are incorporated in and constitute a part of this specification, illustrate embodiments of the invention and together with the description serve to explain the principles of the invention.

In the drawings:
Figure 1 illustrates a multi-home energy supplying system of the present invention including fuel cell unit systems provided for respective houses, and one common-use reforming unit for supplying hydrogen to the fuel cell unit systems in common.
Figure 2 illustrates a detailed structure of any one of the fuel cell unit systems shown in Figure 1,
Figure 3 illustrates an auxiliary distributing unit provided on distributing pipes to connect the fuel cell unit systems of Figure 2 with a distributing unit.
Figure 4 illustrates an ion filter provided on a cooling-water line to connect a stack unit with an integral heat-exchange unit of Figure 2.
Figure 5 illustrates an auxiliary heater provided in a heat-exchange module body of the integral heat-exchange unit of Figure 2.

### DETAILED DESCRIPTION OF THE INVENTION

Reference will now be made in detail to the preferred embodiments of the present invention, examples of which are illustrated in the accompanying drawings.

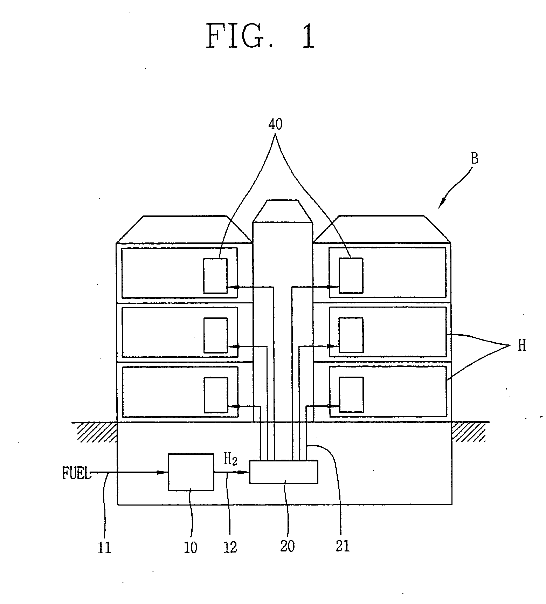

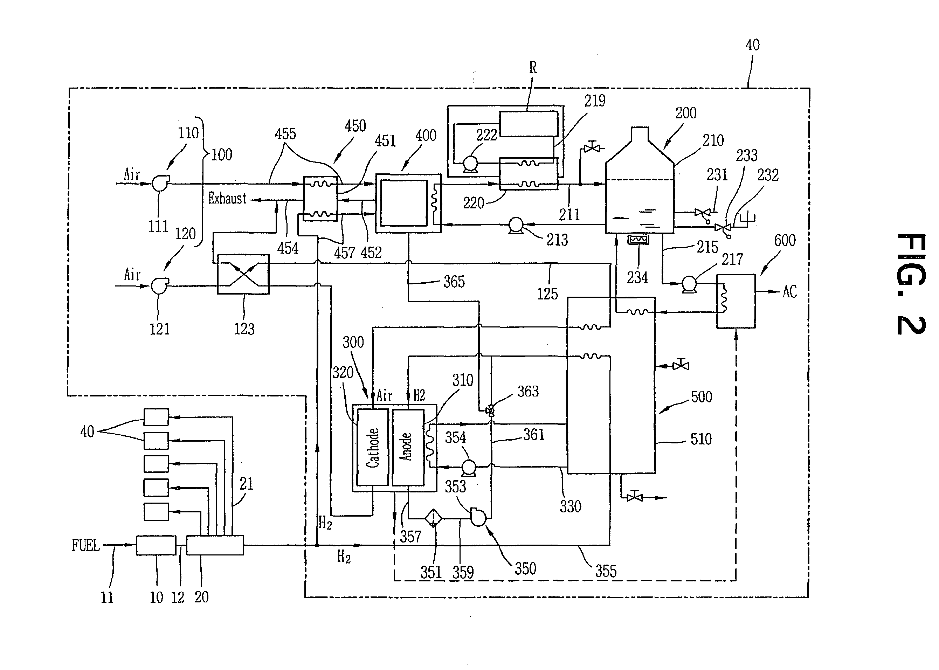

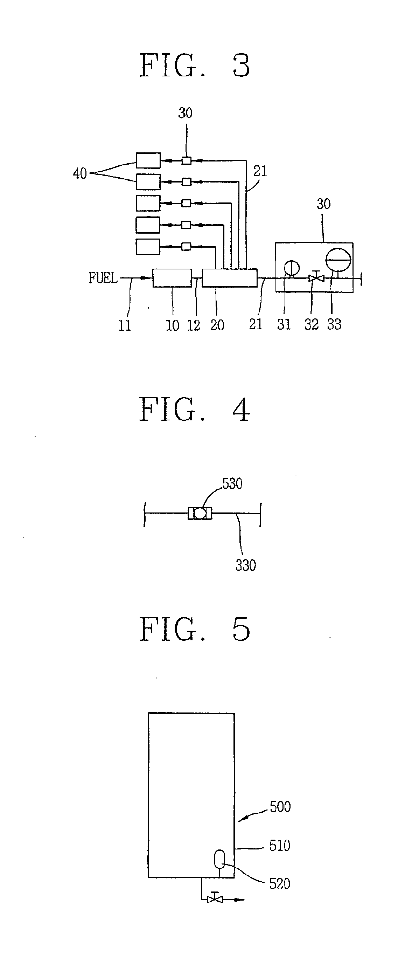

Figure 1 illustrates a multi-home energy supplying system of the present invention including fuel cell unit systems provided for respective houses, and one common-use reforming unit for supplying hydrogen to the fuel cell unit systems in common. Figure 2 illustrates a detailed structure of any one of the fuel cell unit systems shown in Figure 1. Figure 3 illustrates an auxiliary distributing unit provided on distributing pipes to connect the fuel cell unit systems of Figure 2 with a distributing unit. Figure 4 illustrates an ion filter provided on a cooling-water line to connect a stack unit with an integral heat-exchange unit of Figure 2. Figure 5 illustrates an auxiliary heater provided in a heat-exchange module body of the integral heat-exchange unit of Figure 2.

Referring to Figures 1 and 2, the multi-home energy supplying system includes a common-use reforming unit 10 which generates hydrogen by using gases supplied through a gas supplying pipe 11; fuel cell unit systems 40 which are provided in respective houses (H); and a distributing unit 20 which supplies the hydrogen produced in the common-use reforming unit 10 to the fuel cell unit systems 40 by respective distributing pipes 21.

First, a fuel is supplied to the common-use reforming unit 10 by the gas supplying pipe 11, and then the fuel is refined by the sequential processes of desulfurization →reforming reaction → hydrogen refinement. At this time, the fuel is used of a hydrocarbon-based material (CH-based material), for example, LNG, LPG, CH3PH, and etc. Preferably, the common-use reforming unit 10 is installed in a basement of an apartment building due to the space restriction.

Then, a hydrogen supplying pipe 12 is provided between the common-use reforming unit 10 and the distributing unit 20. Thus, the hydrogen produced in the common-use reforming unit 10 is supplied to the distributing unit 20 by the hydrogen supplying pipe 12. The plurality of distributing pipes 21 are provided between the distributing unit 20 and an auxiliary distributing unit 30, to supply the hydrogen to the respective houses.

At this time, the distributing unit 20 supplies the hydrogen to the respective fuel cell unit systems 40 for houses (H) under the high-pressure state, thereby preventing the pressure from being lowered in the process of supplying the hydrogen to the houses (H) of the upper floors. As the hydrogen is supplied under the high-pressure state, it is unnecessary to provide an additional fuel pump to the distributing pipe 21.

In the meantime, since one common-use reforming unit 10 produces the hydrogen for the plurality of fuel cell unit systems 40 in common, it is possible to improve the efficiency in the mass generation of hydrogen as compared with the case of that each fuel cell unit system 40 generates the hydrogen by itself. Also, it is unnecessary to provide an additional reformer for each fuel cell unit system 40. Thus, the fuel cell unit system 40 is decreased in size, so that the restriction for the installation space of the fuel cell unit system 40 is decreased.

Also, the fuel cell unit system 40 is provided to each house of the apartment building, and the hydrogen produced from one reforming unit 10 is supplied to each fuel cell unit system 40 in common. Thus, except that none of the houses of the apartment building use the electricity, the electricity is always used in the apartment building. Accordingly, the load is always working on the fuel cell unit system, the entire energy supplying system is rarely stopped, whereby the efficiency of the energy supplying system is improved. That is, the number of stop and re-operation of the energy supplying system is decreased, thereby improving the efficiency of the entire energy supplying system.

Referring to Figure 3, the auxiliary distributing unit 30 may be additionally provided to the distributing pipes 21 which connect the fuel cell unit systems 40 with the distributing unit 20, whereby the hydrogen is maintained by the constant pressure, and is supplied to the fuel cell unit system 40.

By the auxiliary distributing unit 30, the hydrogen which is maintained by the constant pressure is supplied to a stack unit 300 or an auxiliary heat supplying unit 400 provided in the fuel cell unit system 40.

For this, in the auxiliary distributing unit 30, a regulator 31, a control valve 32 and a pressure measurer 33 are sequentially provided on the distributing pipe 21.

Referring to Figure 2, the fuel cell unit system 40 includes an air supplying unit 100 which supplies an air to a stack unit 300; a hot-water supplying unit 200 which receives a heat stored in an integral heat-exchange unit 500, and supplies a hot water for heating; the stack unit 300 which generate electricity by an electrochemical reaction between the hydrogen supplied from the common-use reforming unit 10 and the air supplied from the air supplying unit 100; a re-circulating unit 350 which re-supplies the remaining hydrogen discharged after the electrochemical reaction to the stack unit 300; an auxiliary heat supplying unit 400 which generates a heat by a catalytic reaction between the air supplied from the air supplying unit 100 and the hydrogen directly supplied from the common-use reforming unit 10 or discharged from the stack unit 300 after the electrochemical reaction, and selectively supplies the produced heat to the hot-water supplying unit 200; a heat-rising unit 450 which heats the hydrogen supplied from the common-use reforming unit 10 to the auxiliary heat supplying unit 400, and the air supplied from the air supplying unit 100 to the auxiliary heat supplying unit 400; the integral heat-exchange unit 500 which cools the stack unit 300 by recovering the heat from the stack unit 300, stores the recovered heat, and heats the hydrogen and air supplied to the stack unit 300 by using the recovered heat; and an electrical output unit 600 which converts the electricity produced in the stack unit 300 into a utility power, and supplies the utility power for house use.

The air supplying unit 100 includes a first air supplying unit 110 which is comprised of a fan 111 to supply the air to the auxiliary heat supplying unit 400; and a second air supplying unit 120 which is comprised of a fan 121 to supply the air to the stack unit 300, and a humidifier 123 to humidify the supplied air.

The hot-water supplying unit 200 includes a hot-water storage tank 210; a first hot-water line 211 which is connected from one portion of the hot-water storage tank 210 to the other portion of the hot-water storage tank 210 through the inside of the auxiliary heat supplying unit 400; a first hot-water pump 213 which is provided on the first hot-water line 211 to circulate the hot water; a second hot-water line 215 which is connected from one portion of the hot-water storage tank 210 with the other portion of the hot-water storage tank 210 through the inside of the electrical output unit 600 and the inside of the integral heat-exchange unit 500; and a second hot-water pump 217 which is provided on the second hot-water line 215 to circulate the hot water. The hot-water storage tank 210 is connected with a water line 231 for the supply of tap water. Also, the hot-water storage tank 210 is provided with a hot-water line 232 through which the hot water stored in the water-water storage tank 210 is supplied to a user. Since the hot water stored in the hot-water storage tank 210 flows out smoothly when the user opens a valve 233 provided on the hot-water line 232, it is unnecessary to provide an additional pump in the hot-water line 232. In the meantime, a radiator 234 is provided under the hot-water storage tank 210, to prevent the temperature of hot water stored in the hot-water storage tank 210 from being raised excessively during the summer season.

The hot-water supplying unit 200 transmits the heat of the auxiliary heat supplying unit 400 to the hot water stored in the hot-water storage tank 210 by the first hot-water line 211; cools the electrical output unit 600 by the second hot-water line 215; and transmits the heat of the electrical output unit 600 to the hot water stored in the hot-water storage tank 210.

Also, the hot-water supplying unit 200 heats the room (R) with the heat of hot water flowing through the first hot-water line 211. For this, the hot-water supplying unit 200 is comprised of a heating line 219 which passes through all the portions of the floor, the ceiling and the wall of the room (R); and a heat exchanger 220 through which the first hot-water line 211 passes. The heat of hot water which flows in the first hot-water line 211 is transmitted to the hot water which flows in the heating line 219. The heating line 219 is provided with an additional hot-water pump 222 which circulates the heat of hot water through the floor, the ceiling and the wall of the room (R).

The stack unit 300 includes a fuel pole 310 supplied with the hydrogen; and an air pole 320 supplied with the air. That is, the hydrogen produced in the common-use reforming unit 10 is supplied to the fuel pole 310 through the hydrogen supplying pipe 12, the distributing unit 20, the distributing pipe 21, the auxiliary distributing unit 30, and the first line 355. Also, the air provided from the second air supplying unit 120 of the air supplying unit 100 is supplied to the air pole 320 through the humidifier 123 and the air supplying line 125.

Thus, the electrical energy is generated by the electrochemical reaction between the hydrogen supplied to the fuel pole 310 and the air supplied to the air pole 320. Generally, the fuel pole 31 and the air pole 320 are realized by a stack (not shown), wherein the stack is provided with a plurality of unit stacks, each stack including two bi-polar plates and an MEA provided therebetween.

The auxiliary heat supplying unit 400 removes impurities from the remaining hydrogen discharged from the stack unit 300. In the meantime, if requiring the heat for heating and hot water in a hurry, the heat is produced by reacting the hydrogen directly supplied from the common-use reforming unit 10 and the air supplied from the first air supplying unit 110 with a catalyst. In detail, when trying to heat the water stored in the hot-water storage tank 210 in a short time, that is, the rapid supply of hot water, the hydrogen of the common-use reforming unit 10 is directly supplied to the auxiliary heat supplying unit 400. Then, the supplied hydrogen and the air supplied from the first air supplying unit 110 reacts on the catalyst, whereby the reaction heat is produced. Thus, the hot water which flows through the first hot-water line 211 is heated by the reaction heat, whereby the water stored in the hot-water storage tank 210 is heated quickly. The auxiliary heat supplying unit 400 may be provided with other heating resources, for example, an electric burner or a gas burner, which can generates the heat without using the catalyst.

In the winter season where the large amount of heat energy is used and the small amount of electrical energy is used, the sufficient heat energy is transmitted to the hot water stored in the hot-water supplying unit 200, and is then supplied to each house by operating the auxiliary heat supplying unit 400. In the meantime, in case of the summer season where the small amount of heat energy is used and the large amount of electrical energy is used, the operation of the auxiliary heat supplying unit 400 is stopped so that the hydrogen is supplied to the stack unit 300 instead of the auxiliary heat supplying unit 400, that is, the generation amount of electricity in the stack unit 300 is increased, whereby the sufficient electrical energy is supplied to each house.

Eventually, it is possible to supply the electrical energy and the heat energy to the plurality of houses with high efficiency. Especially, both the electrical energy and the heat energy are stably supplied to the plurality of houses in the summer and winter seasons, thereby improving the reliability. Further, the environmental contamination can be prevented owing to the decreased used amount of oil for producing the electrical energy.

The heat-rising unit 450 includes a heat-rising body 451; an exhaust gas inflow line 452 which is provided for the inflow of exhaust gas discharged from the auxiliary heat supplying unit 400 into the inside of the heat-rising body 451; an exhaust gas discharging line 455 which is provided to discharge the exhaust gas provided to the inside of heat-rising body 451; a catalytic air line 455 which is provided through the inside of the heat-rising body 451 to supply the air provided from the air supplying unit 100 to the auxiliary heat supplying unit 400; and a catalytic fuel line 457 which is provided through the inside of the heat-rising body 451 to supply the hydrogen supplied from the common-use reforming unit 10 to the auxiliary heat supplying unit 400. Owing to the heat-rising unit 450, the exhaust gas of high temperature, discharged after the catalytic reaction, can be reused for the temperature rise of hydrogen and air supplied to the auxiliary heat supplying unit 400.

The re-circulating unit 350 includes a moisture remover 351 which removes moistures from the hydrogen discharged from the stack unit 300; a fan 353 which sends the hydrogen having no moisture to the stack unit 300; and a circulating line comprised of a first line 355 which connects the common-use reforming unit 10 with the stack unit 300, a second line 357 which connects the stack unit 300 with the moisture remover 351, a third line 359 which connects the moisture remover 351 with the fan 353, and a fourth line 361 which connects the fan 353 with the first line 355. Also, the re-circulating unit 350 is provided on the fourth line 361, wherein the re-circulating unit 350 includes a three-directional valve 363 which selectively supplies the hydrogen discharged from the stack unit 300 to the stack unit 300 or the auxiliary heat supplying unit 400; and a fifth line 365 which connects the three-directional valve 363 with the auxiliary heat supplying unit 400.

The rotation number of fan 353 is previously set as the maximum revolutions to supply the hydrogen required for the maximum quantity of electricity generated in the stack unit 300.

In detail, after previously setting the supplying quantity of hydrogen to correspond with the maximum quantity of electricity generated in the stack unit 300, the maximum revolutions of fan 353 corresponding to the supplying quantity of hydrogen are set. Irrespective of the quantity of electricity virtually generated in the stack unit 300, the set maximum revolutions of fan 353 are fixed. That is, even though it is possible to decrease the rotation number of fan 353 as the quantity of electricity virtually generated in the stack unit 300 is small, the fan 353 is rotated in accordance with the maximum revolutions.

If the stack unit 300 excessively produces the hydrogen by rotating the fan 353 in accordance with the maximum revolutions, the hydrogen discharged from the stack unit 300 is re-supplied to the stack unit 300 through the circulating line 355, 357, 359, 361, thereby preventing a waste of hydrogen.

If rotating the fan 353 in accordance with the maximum revolutions, the re-circulated hydrogen is well mixed with the hydrogen supplied to the stack unit 130.

Also, it is unnecessary to provide an additional controller to control the rotation number of the fan 353. As the rotation number of fan 353 is set as the maximum revolutions, the moisture inside the moisture remover 351 is discharged rapidly, thereby improving the efficiency of electricity generation in the stack unit 300.

The integral heat-exchange unit 500 includes a heat-exchange module body 510 which stores a deionized water; and an auxiliary heater 520 which is provided inside the heat-exchange module body 510.

The inside of the heat-exchange module body 510 is comprised of the second hot-water line 215 which is connected from one portion of the hot-water storage tank 210 with the other portion of the hot-water storage tank 210 through the inside of the electric output unit 600; the first line 355 which connects the common-use reforming unit 10 with the stack unit 300 to supply the hydrogen; and the air supplying line 125 which connects the air supplying unit 100 with the stack unit 300 to supply the air. Also, the heat-exchange module body 510 is connected with a cooling-water line 330 which makes a cooling water pass through the inside of the stack unit 300 so as to cool the stack unit 300. The cooling-water line 300 is provided with a cooling-water pump 354 which circulates the cooling water.

Referring to Figure 4, the cooling-water line 330 may be provided with at least one ion filter 530 to maintain the low conductivity of the cooling water.

Referring to Figure 5, at least one auxiliary heater 520 may be provided inside the heat-exchange module body 510 by way of provision against the case requiring the rapid heating of the cooling water to raise the temperature of the stack unit 300 on the initial operation of the stack unit 300.

If the temperature of the stack unit 300 is raised appropriately, the auxiliary heater 520 is stopped since there is no requirement for heat-rising of the stack unit 300 in dependence on the external heat.

By the integral heat-exchange unit 500, the stack unit 300 is cooled without the large number of heat exchangers; the temperature of hydrogen supplied to the fuel pole 310 of the stack unit 300 is raised; the temperature of air supplied to the air pole 320 of the stack unit 300 is raised; and the hot water stored in the hot-water storage tank 210 is heated, at one time.

The electric output unit 600 converts the electricity generated in the stack unit 300 into the utility power, and then supplies the utility power to a lighting apparatus, a television, a refrigerator, and an air-conditioner, provided in each house. Also, the electric output unit 600 may be connected with an external electric supplying line (not shown) to supply the external electricity supplied from a power plant to each house. That is, if the electricity of the fuel cell unit system 40 provided in each house is unstable, the external electricity provided from the power plant is supplied to each house, thereby obtaining the stable power supply for each house.

As described above, the fuel cell unit system 40 has no individual reformer. That is, the fuel cell unit system 40 is provided to each house of the apartment building (B, Figure 1), and one common-use reforming unit 10 for supplying the hydrogen to each house of the apartment building is provided in the basement of the apartment building, so that it is possible to minimize the occupied space of the fuel cell unit system provided in each house. Thus, the residential space for each house is relatively increased, and the fuel cell unit system is freely installed in each house without regard to the restrictions of position.

An operation of the fuel cell system provided with the fuel cell unit system will be explained as follows.

Referring to Figure 1, the fuel such as liquefied natural gas (LNG) is supplied to the common-use reforming unit 10 through the gas supplying pipe 11. As the hydrogen is produced in the common-use reforming unit 10, the produced hydrogen is supplied to the distributing unit 20 through the hydrogen supplying pipe 12. The distributing unit 20 distributes the hydrogen to the auxiliary distributing unit 30 provided in each house (H) through the distributing pipe 21. The auxiliary distributing unit 30 supplies the hydrogen to the stack unit 30 of the fuel cell unit system 40 through the first line 355 (Figure 2) under the constant pressure state.

Referring to Figure 2, the hydrogen is supplied to the fuel pole 310 of the stack unit 300, and the second air supplying unit 120 supplies the air to the air pole 320 of the stack unit 300 through the humidifier 123 and the air supplying line 125. Then, the electrochemical reaction is generated between the hydrogen supplied to the fuel pole 310 and the air supplied to the air pole 320, thereby producing the electrical energy, the heat energy and the water.

The electrical energy produced in the stack unit 300 is supplied to the lighting apparatus, the television, the refrigerator, and the air-conditioner, provided in each house.

Whenever the electricity produced in the stack unit 300 is unstable, the external electricity provided from the power plant is supplied to each house through an external power supplying line 620, thereby obtaining the stable power supply for each house.

The integral heat-exchange unit 500 cools the stack unit 300, and heats the cooling water with the heat transmitted from the stack unit 300. That is, the heat energy produced in the stack unit 300 is transmitted to the cooling water which flows in the cooling-water line 330, whereby the cooling water is heated.

Also, the first line 355 which supplies the hydrogen to the fuel pole 310 of the stack unit passes through the inside of the integral heat-exchange unit 500, whereby the temperature of the hydrogen supplied to the fuel pole 310 is raised.

Also, the air supplying line 125 which supplies the air to the air pole 320 of the stack unit 300 passes through the inside of the integral heat-exchange unit 500, whereby the temperature of the air supplied to the air pole 320 is raised.

Also, the second hot-water line 215 of the hot-water supplying unit 200 passes through the inside of the integral heat-exchange unit 500, whereby the hot water stored in the hot-water storage tank 210 is heated.

The heated hot water stored in the hot-water storage tank 210 is supplied to the house through the hot-water line 232 at needed. Also, the room (R) may be heated by the first hot-water line 211, the heat exchanger 220 and the heating line 219. At this time, the temperature of hot water used can be controlled by mixture of the tap water supplied from the external, and the temperature of heating the room (R) can be controlled by a controller (not shown).

In the meantime, when trying to heat the water stored in the hot-water storage tank 210 in a short time, that is, the rapid supply of hot water, the hydrogen of the common-use reforming unit 10 is directly supplied to the auxiliary heat supplying unit 400 through the catalytic fuel line 457.

Thus, the heat energy is produced by the catalytic reaction between the supplied hydrogen and the air supplied from the first air-supplying unit 110. Then, the hot water which flows in the first hot-water line 211 is heated by the produced heat energy, whereby the water stored in the hot-water storage tank 210 is heated in a short time.

As mentioned above, the fuel cell unit system according to the present invention has the following advantages.

Firstly, the fuel cell unit system is installed in each house of the apartment building, and one common-use reforming unit 10 for supplying the hydrogen to each house of the apartment building is provided in the basement of the apartment building, so that it is possible to minimize the occupied space of the fuel cell unit system provided in each house. Thus, the residential space for each house is relatively increased, and the fuel cell unit system is freely installed in each house without regard to the restrictions of position. Also, the entire system can be applied to the apartment building with easiness.

Secondly, the fuel cell unit system is installed in each house of the apartment building, and the hydrogen is supplied to each house of the apartment building by one common-use reforming unit. Except that none of the houses of the apartment building use the electricity, the electricity is always used in the apartment building. Accordingly, since the load is always working on the fuel cell unit system, the entire energy supplying system is rarely stopped, whereby the efficiency of the energy supplying system is improved. That is, the number of generating stop and re-operation of the energy supplying system is decreased, thereby improving the efficiency of the entire energy supplying system.

Thirdly, the fuel cell unit system is provided with the hot-water supplying unit, whereby the heat of the auxiliary heat supplying unit is transmitted to the hot water stored in the hot-water storage tank through the first hot-water line, and the heat of the electric output unit is transmitted to the hot water stored in the hot-water storage tank through the second hot-water line. Accordingly, the heat stored in the hot water is transmitted to the hot water which flows in the heating line passing through all the portions of the floor, the ceiling and the wall of the room (R), whereby the room is heated with high efficiency.

Fourthly, the fuel cell unit system is provided with the auxiliary heat supplying unit. In the winter season where the large amount of heat energy is used and the small amount of electrical energy is used, the auxiliary heat supplying unit is operated so as to transmit the sufficient heat energy to the hot water stored in the hot-water storage tank, whereby each house is supplied with the sufficient heat energy. In the meantime, in case of the summer season where the small amount of heat energy is used and the large amount of electrical energy is used, the operation of the auxiliary heat supplying unit is stopped so that the hydrogen is supplied to the stack unit instead of the auxiliary heat supplying unit, that is, the generation amount of electricity in the stack unit is increased, whereby the sufficient electrical energy is supplied to each house. Eventually, it is possible to supply the electrical energy and the heat energy to the plurality of houses with high efficiency. Especially, both the electrical energy and the heat energy are stably supplied to the plurality of houses in the summer and winter seasons, thereby improving the reliability. Further, the environmental contamination can be prevented owing to the decreased used amount of oil for producing the electrical energy.

Fifthly, the fuel cell unit system is provided with the heat-rising unit, whereby the exhaust gas of high temperature, discharged after the catalytic reaction, can be reused for the temperature rise of hydrogen and air supplied to the auxiliary heat supplying unit.

Sixthly, the fuel cell unit system is provided with the re-circulating system, whereby the exhaust gas discharged from the stack unit after the generation of electricity is re-supplied to the stack unit, and is re-circulated therein, whereby it is possible to improve the efficiency in use of fuel.

Also, since the fan of the re-circulating unit is previously set as the maximum revolutions, it is unnecessary to provide the additional controller for varying the rotation number of fan, thereby obtaining the simplified structure and the decreased cost.

Also, since the fan of the re-circulating unit is previously set as the maximum revolutions, the moisture inside the moisture remover 351 is discharged rapidly, thereby improving the efficiency of electricity generation in the stack unit.

Seventhly, since the fuel cell unit system is provided with the integral heat-exchange unit, the stack unit is cooled without the large number of heat exchangers; the temperature of hydrogen supplied to the fuel pole of the stack unit is raised; the temperature of air supplied to the air pole of the stack unit is raised; and the hot water stored in the hot-water storage tank is heated, at one time.

As the present invention may be embodied in several forms without departing from the spirit or essential characteristics thereof, it should also be understood that the above-described embodiments are not limited by any of the details of the foregoing description, unless otherwise specified, but rather should be construed broadly within its spirit and scope as defined in the appended claims, and therefore all changes and modifications that fall within the metes and bounds of the claims, or equivalents of such metes and bounds are therefore intended to be embraced by the appended claims.

## Claims

1. A fuel cell unit system provided in a multi-home energy supplying system, wherein the multi-home energy supplying system includes the plurality of fuel cell unit system provided to respective houses, and one common-use reforming unit to supply hydrogen to the plurality of fuel cell unit system, comprising:
a stack unit which generates electricity by an electrochemical reaction between supplied air and the hydrogen supplied from the common-use reforming unit;
an air supplying unit which supplies the air to the stack unit;
an integral heat exchange unit which cools the stack unit by recovering the heat from the stack unit, and stores the recovered heat;
a hot-water supplying unit which receives the heat stored in the integral heat exchange unit, and provides heat and hot water;
an auxiliary heat supplying unit which generates the heat by receiving the air supplied from the air supplying unit, and the hydrogen directly supplied from the common-use reforming unit or discharged from the stack unit after the electrochemical reaction, and selectively supplies the generated heat to the hot-water supplying unit; and
an electric output unit which converts the electricity generated in the stack unit into a utility power, and supplies the produced utility power to the respective houses.

2. The fuel cell unit system of claim 1, wherein the air supplying unit includes:
a first air supplying unit which is comprised of a fan to supply the air to the auxiliary heat supplying unit; and
a second air supplying unit which is comprised of a fan to supply the air to the stack unit, and a humidifier to humidify the supplied air.

3. The fuel cell unit system of claim 2, wherein the integral heat exchange unit raises a temperature of air and hydrogen supplied to the stack unit by using the stored heat.

4. The fuel cell unit system of claim 1 or 3, wherein the integral heat exchange unit includes:
a heat exchange module body connected with a cooling-water line which makes a cooling water pass through the inside of the stack unit so as to cool the stack unit, the heat exchange module body having the inside provided with a second hot-water line which is connected from one portion of the hot-water storage tank with the other portion of the hot-water storage tank through the inside of the electric output unit, a first line which connects the common-use reforming unit with the stack unit to supply the hydrogen, and a air supplying line which connects the air supplying unit with the stack unit to supply the air, wherein the second hot-water line, the first line and the air supplying line pass through the inside of the heat exchange module body; and
an auxiliary heater provided inside the heat exchange module body.

5. The fuel cell unit system of claim 4, wherein an ion filter is provided in the cooling-water line.

6. The fuel cell unit system of claim 1, wherein the hot-water supplying unit includes:
a hot-water storage tank which stores the hot water;
a first hot-water line which is connected from one portion of the hot-water storage tank with the other portion of the hot-water storage tank through the inside of the auxiliary heat supplying unit;
a first hot-water pump which is provided in the first hot-water line, and circulates the hot water;
a second hot-water line which is connected from one portion of the hot-water storage tank with the other portion of the hot-water storage tank through the inside of the electric output unit and the inside of the integral heat exchange unit; and
a second hot-water pump which is provided in the second hot-water line, and circulates the hot water.

7. The fuel cell unit system of claim 6, wherein the hot-water supplying unit further includes a heat exchanger which transmits the heat of hot water flowing in the first hot-water line to the hot water flowing in the inside of the heating line passing through all portions of a floor or wall of a room thereby heating the room.

8. The fuel cell unit system of claim 1, further comprising a heat-rising unit which raises a temperature of the hydrogen supplied to the auxiliary heat supplying unit from the common-use reforming unit, and also raises a temperature of the air supplied to the auxiliary heat supplying unit from the air supplying unit by using an exhaust gas of high temperature discharged from the auxiliary heat supplying unit,
wherein the heat-rising unit includes:
a heat-rising body;
an exhaust gas inflow line which is provided for the inflow of exhaust gas discharged from the auxiliary heat supplying unit into the inside of the heat-rising body;
an exhaust gas discharging line which is provided to discharge the exhaust gas of the inside of heat-rising body;
a catalytic air line which is provided through the inside of the heat-rising body to supply the air provided from the air supplying unit to the auxiliary heat supplying unit; and
a catalytic fuel line which is provided through the inside of the heat-rising body to supply the hydrogen supplied from the common-use reforming unit to the auxiliary heat supplying unit.

9. The fuel cell unit system of claim 1, further comprising a re-circulating unit which re-supplies the remaining hydrogen discharged after the electrochemical reaction to the stack unit,
wherein the re-circulating unit includes:
a moisture remover which removes moistures from the hydrogen discharged from the stack unit;
a fan which sends the hydrogen having no moisture to the stack unit; and
a circulating line comprised of a first line which connects the common-use reforming unit with the stack unit, a second line which connects the stack unit with the moisture remover, a third line which connects the moisture remover with the fan, and a fourth line which connects the fan with the first line.

10. The fuel cell unit system of claim 9, wherein the re-circulating unit further includes:
a three-directional valve which is provided in the fourth line to selectively supply the hydrogen discharged from the stack unit to the stack unit or the auxiliary heat supplying unit; and
a fifth line which connects the three-directional valve with the auxiliary heat supplying unit.

11. The fuel cell unit system of claim 9 or 10, wherein the rotation number of fan is previously set as the maximum revolutions to supply the hydrogen required for the maximum quantity of electricity produced in the stack unit.
